# EUROPEAN PATENT SPECIFICATION

(11) **EP 3 933 340 B1**
(45) Date of publication and mention of the grant of the patent: **03.01.2024**
(21) Application number: 20762283.8
(22) Date of filing: 05.02.2020
(51) Int. Cl.: G01C 3/06, G06T 7/593, H04N 13/128, G01C 3/14

(54) **ARITHMETIC UNIT AND PARALLAX CALCULATION METHOD**
ARITHMETISCHE EINHEIT UND PARALLAXBERECHNUNGSVERFAHREN
UNITÉ ARITHMÉTIQUE ET PROCÉDÉ DE CALCUL DE PARALLAXE

(30) Priority: 27.02.2019 JP 2019034231
(43) Date of publication of application: 05.01.2022
(73) Proprietor: Hitachi Astemo, Ltd., Hitachinaka-shi Ibaraki 312-8503 (JP)
(72) Inventor: UCHIDA, Yusuke, Tokyo 100-8280 (JP); INATA, Keisuke, Tokyo 100-8280 (JP); NONAKA, Shinichi, Hitachinaka-shi Ibaraki 312-8503 (JP); TAKADA, Masashi, Hitachinaka-shi Ibaraki 312-8503 (JP)
(74) Representative: MERH-IP Matias Erny Reichl Hoffmann Patentanwälte PartG mbB
(86) International application number: PCT/JP2020/004334
(87) International publication number: WO 2020/175062

(56) References cited:
- JP-A- 2007 304 743
- JP-A- 2017 054 481
- JP-A- 2018 151 999
- US-A1- 2015 296 202
- US-A1- 2015 302 595
- XIA HU ET AL: "Disparity Adjustment for Local Stereo Matching", COMPUTER AND INFORMATION TECHNOLOGY (CIT), 2010 IEEE 10TH INTERNATIONAL CONFERENCE ON, IEEE, PISCATAWAY, NJ, USA, 29 June 2010 (2010-06-29), pages 1388-1392, XP031757441, ISBN: 978-1-4244-7547-6
- SONG SUNMIN ET AL: "Real-time correction system for improving the disparity image", 2013 13TH INTERNATIONAL CONFERENCE ON CONTROL, AUTOMATION AND SYSTEMS (ICCAS 2013), IEEE, 20 October 2013 (2013-10-20), pages 1138-1142, XP032540273, ISSN: 2093-7121, DOI: 10.1109/ICCAS.2013.6704088 [retrieved on 2014-01-03]
- KRISHNA RAO VIJAYANAGAR ET AL: "Refinement of depth maps generated by low-cost depth sensors", SOC DESIGN CONFERENCE (ISOCC), 2012 INTERNATIONAL, IEEE, 4 November 2012 (2012-11-04), pages 355-358, XP032301936, DOI: 10.1109/ISOCC.2012.6407114 ISBN: 978-1-4673-2989-7
- VIEIRA GABRIEL DA SILVA ET AL: "Disparity Map Adjustment: a Post-Processing Technique", 2018 IEEE SYMPOSIUM ON COMPUTERS AND COMMUNICATIONS (ISCC), IEEE, 25 June 2018 (2018-06-25), pages 580-585, XP033448588, DOI: 10.1109/ISCC.2018.8538562 [retrieved on 2018-11-15]
- ZHANG KANG ET AL: "Insights into local stereo matching: Evaluation of disparity refinement approaches", 2014 IEEE INTERNATIONAL CONFERENCE ON INFORMATION AND AUTOMATION (ICIA), IEEE, 28 July 2014 (2014-07-28), pages 1195-1200, XP032667882, DOI: 10.1109/ICINFA.2014.6932831 [retrieved on 2014-10-21]

## Description

### Technical Field

The present invention relates to an operation device and a disparity calculation method.

### Background Art

There is known a position measurement device that measures a distance to an object present in a field of view of a camera using a stereo image captured by a stereo camera having a pair of cameras on the basis of the principle of triangulation. That is, in the principle of triangulation, the distance from the camera to the object is calculated using a positional deviation between images of the same object captured by the left and right cameras, that is, disparity. The disparity is derived by identifying any place where an image on one image of the object exists on the other image.

Various techniques for deriving disparity have been proposed so far. For example, in a typical technique, block matching is known in which a region having the lowest dissimilarity with a region including a plurality of pixels in one image is searched for in the other image. The density of disparity calculation can be determined according to an application such as one disparity for a plurality of pixels and one disparity for one pixel. However, in a case where there is a plurality of regions with a low dissimilarity in a process of searching for the region with the low dissimilarity, it is difficult to determine which one is a correct disparity, and there is a problem that the disparity of the region has to be determined to be invalid, that is, a problem of a so-called invalid disparity. Regarding the elimination of the disparity invalidity, for example, a technique of PTL 1 is known. PTL 1 discloses a disparity image generation device including a valid pixel determination unit that determines a valid pixel based on a feature value of each pixel in a captured image; and a validation unit that validates a disparity that is not a valid disparity in the vicinity of a valid disparity equivalent to the valid pixel in a disparity image corresponding to the captured image. Further, nPTL1 and nPTL2 each disclose a method for identification of invalid regions and a weigh-based disparity adjustment.

### Citation List

### Patent Literature

PTL 1: JP 2017-54481 A

### Non-Patent Literature:

nPTL1: XIA HU ET AL, "Disparity Adjustment for Local Stereo Matching", COMPUTER AND INFORMATION TECHNOLOGY (CIT), 2010 IEEE 10TH INTERNATIONAL CONFERENCE ON, IEEE, PISCATAWAY, NJ, USA, (20100629), ISBN 978-1-4244-7547-6, pages 1388 - 1392, XP031757441,
nPTL2: SONG SUNMIN ET AL, "Real-time correction system for improving the disparity image", 2013 13TH INTERNATIONAL CONFERENCE ON CONTROL, AUTOMATION AND SYSTEMS (ICCAS 2013), IEEE, doi:10.1109/ICCAS.2013.6704088, ISSN 2093-7121, (20131020), pages 1138 - 1142, (20140103), XP032540273.

### Summary of Invention

### Technical Problem

In the invention described in PTL 1, the disparity is determined without using a dissimilarity calculation result of a block for which a disparity calculation has failed, and thus, there may occur a problem in the validity and accuracy of the determined disparity.

### Solution to Problem

The above-mentioned problem is solved by providing an operation device and a disparity calculation method is as set out in the appended set of claims. Preferred embodiments of the present invention are described in the dependent claims.

### Advantageous Effects of Invention

According to the present invention, the appropriate disparity can be calculated.

### Brief Description of Drawings

[FIG. 1] FIG. 1 is a hardware configuration diagram of a vehicle 9.
[FIG. 2] FIG. 2 is a functional block diagram of an operation device 1 according to the first embodiment.
[FIG. 3] FIG. 3 is a conceptual view for describing a disparity determination performed by a first disparity search unit 103A.
[FIG. 4] FIG. 4 is a conceptual view for describing operations of a condition generation unit 106 and a second disparity search unit 103B.
[FIG. 5] FIG. 5 is a flowchart illustrating an operation of the operation device 1 according to the first embodiment.
[FIG. 6] FIG. 6 is a functional configuration diagram of the operation device 1 according to a second modification.
[FIG. 7] FIG. 7 is a view illustrating a pixel block referred to by a condition generation unit 106 according to a third modification.
[FIG. 8] FIG. 8 is a view illustrating a specific example in which the condition generation unit 106 uses a disparity value of a pixel block adjacent to an invalid region 109 in the horizontal direction as a standard value.
[FIG. 9] FIG. 9 is a view illustrating an example in which the condition generation unit 106 refers to a pixel block other than the pixel block adjacent to the invalid region.
[FIG. 10] FIG. 10 is a functional configuration diagram of an operation device 1 according to a fifth modification.
[FIG. 11] FIG. 11 is a flowchart illustrating an operation of the operation device 1 according to the fifth modification.
[FIG. 12] FIG. 12 is a functional configuration diagram of an operation device 1 according a sixth modification.
[FIG. 13] FIG. 13 is a view for describing an operation of a fourth disparity search unit 103D according to the sixth modification.
[FIG. 14] FIG. 14 is a functional block diagram of an operation device 1A according to a second embodiment.
[FIG. 15] FIG. 15 is a flowchart illustrating an operation of the operation device 1A according to the second embodiment.
[FIG. 16] FIG. 16 is a hardware configuration diagram of a vehicle 9B according to a third embodiment.
[FIG. 17] FIG. 17 is a view illustrating a pixel block referred to by a condition generation unit 106B according to the second embodiment.

### Description of Embodiments

### -First Embodiment-

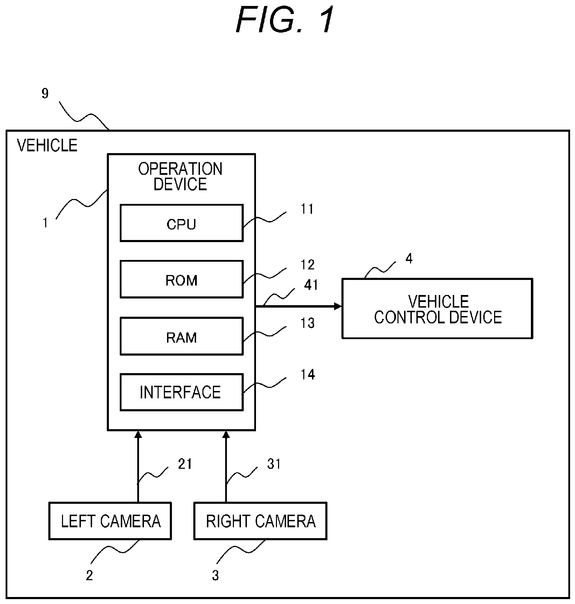

Hereinafter, a first embodiment of an operation device 1 according to the present invention will be described with reference to FIGS. 1 to 5.

### (Configuration)

FIG. 1 is a hardware configuration diagram of a vehicle 9 on which an operation device 1 according to the present invention is installed. The vehicle 9 includes the operation device 1, a left camera 2, a right camera 3, and a vehicle control device 4. The operation device 1 and the vehicle control device 4 are electronic control units. The left camera 2 and the right camera 3 output captured images obtained by capturing the surroundings of the vehicle 9 to the operation device 1. The left camera 2 and the right camera 3 are arranged side by side in the horizontal direction. Hereinafter, the image captured by the left camera 2 will be referred to as a left image 21, and the image captured by the right camera 3 will be referred to as a right image 31. In addition, the left camera 2 will be referred to as a "first camera", and the right camera 3 will be referred to as a "second camera", in some cases.

The operation device 1 includes a CPU 11 that is a central processing unit, a ROM 12 that is a read-only storage device, a RAM 13 that is a readable/writable storage device, and an interface 14 that receives the left image 21 and the right image 31. The CPU 11 develops and executes a program, stored in the ROM 12, in the RAM 13, thereby realizing a plurality of functions to be described later. However, instead of a combination of the CPU 11, the ROM 12, and the RAM 13, the operation device 1 may be realized by a field programmable gate array (FPGA) which is a rewritable logic circuit or an application specific integrated circuit (ASIC) which is an integrated circuit for a specific application. In addition, the operation device 1 may be realized by a combination of different configurations, for example, a combination of the CPU 11, the ROM 12, the RAM 13, and the FPGA, instead of the combination of the CPU 11, the ROM 12, and the RAM 13.

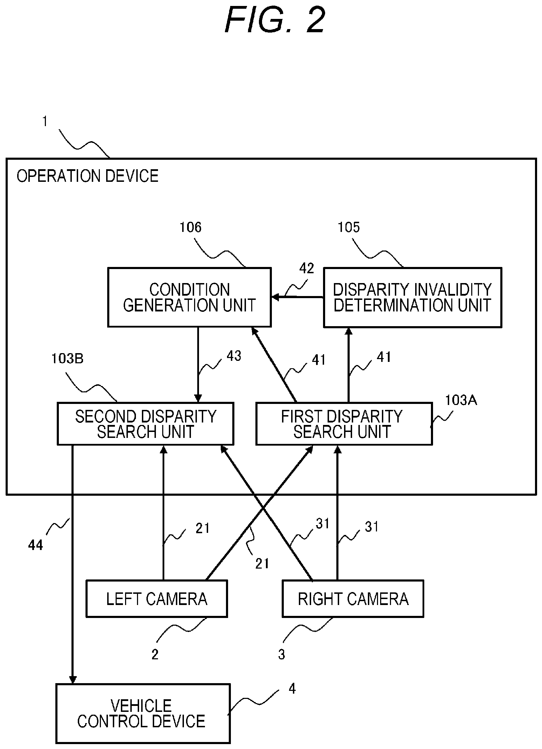

The operation device 1 creates a temporary distance image 41 using the input left image 21 and right image 31, and outputs the temporary distance image 41 to the vehicle control device 4. A process in which the operation device 1 creates the temporary distance image 41 will be described later in detail with reference to FIG. 2 and subsequent drawings. The temporary distance image 41 represents the closeness or distantness of the distance on the two-dimensional plane with the gray scale of color or the saturation of color. However, each pixel of the temporary distance image 41 stores an integer value of "0" to "255" representing the gray scale in the present embodiment. Here, "0" is a special numerical value indicating that the distance is not calculable.

A range illustrated in the temporary distance image 41 is substantially the same as those of the left image 21 and the right image 31. However, the range illustrated in the temporary distance image 41 may be narrower than ranges illustrated in the left image 21 and the right image 31. The number of pixels of the temporary distance image 41 may be substantially the same as or a fraction of those of the left image 21 and the right image 31.

The vehicle control device 4 controls the vehicle 9 using the temporary distance image 41 input from the operation device 1. For example, the vehicle control device 4 detects an obstacle present around the vehicle 9 from the temporary distance image 41, and controls the vehicle 9 so as to avoid a collision between the vehicle 9 and the detected obstacle. The control of the vehicle 9 by the vehicle control device 4 is realized, for example, as the vehicle control device 4 outputs an operation command to a steering device (not illustrated) and a braking device (not illustrated).

FIG. 2 is a functional block diagram illustrating functions of the operation device 1 as functional blocks. The operation device 1 includes, as its functions, a first disparity search unit 103A, a second disparity search unit 103B, a disparity invalidity determination unit 105, and a condition generation unit 106. The first disparity search unit 103A, the second disparity search unit 103B, the disparity invalidity determination unit 105, and the condition generation unit 106 are realized by software processing with the above-described CPU 11. Note that information generated by the processing to be described later, for example, the temporary distance image 41, information 42 indicating an invalid region, a search condition 43, and a distance image 44 are temporarily stored in the RAM 13.

The left image 21 and the right image 31 are input to the first disparity search unit 103A. First, the first disparity search unit 103A sets one of the left image 21 and the right image 31 as a standard image and the other as a reference image. The first disparity search unit 103A may select either the left image 21 or the right image 31 as the standard image, but this selection is made consistent in the present embodiment. Then, the first disparity search unit 103A searches for a region of the reference image corresponding to a pixel block of the standard image. A known technique is used for this search. For example, the first disparity search unit 103A calculates a dissimilarity by Zero-mean Sum of Absolute Differences (ZSAD), and searches for a region on the reference image having the smallest ZSAD value.

The first disparity search unit 103A may search for all regions on an epipolar line or may search for only a predetermined range on the epipolar line. A size of a pixel block searched by the first disparity search unit 103A may be 1 pixel × 1 pixel, that is, one pixel, or may be 4 pixels × 4 pixels, 8 pixels × 8 pixels, 16 pixels × 25 pixels, or the like. Note that the size of the pixel block is also referred to as a size of a "first pixel block". The first disparity search unit 103A may use any one of Sum of Absolute Differences (SAD), Sum of Squared Differences (SSD), Zero-mean Sum of Squared Differences (ZSSD), Normalized Cross Correlation (NCC), and Zero-mean Normalized Cross Correlation (ZNCC) instead of ZSAD.

The first disparity search unit 103A calculates a disparity for each pixel block to create the temporary distance image 41. However, when it is difficult to determine a disparity, the first disparity search unit 103A sets a pixel value of the temporary distance image 41 corresponding to such a pixel block to a special value indicating that the disparity is not calculable, for example, "0". Note that the first disparity search unit 103A may use the calculated disparity directly as the value of each pixel of the temporary distance image 41, or may perform scale conversion on the disparity value such that the minimum value to the maximum value are 1 to 255. Note that the operation of the first disparity search unit 103A is performed in units of first pixel blocks, the temporary distance image 41 is also output in units of first pixel blocks.

The disparity invalidity determination unit 105 identifies a pixel whose disparity is invalidated in the temporary distance image 41, that is, a pixel whose pixel value is set to "0", from the temporary distance image 41. Hereinafter, a region of the pixel whose disparity is invalidated is referred to as an "invalid region". The disparity invalidity determination unit 105 outputs the information 42 indicating the invalid region to the condition generation unit 106. When the information 42 indicating the invalid region is input from the disparity invalidity determination unit 105, the condition generation unit 106 generates the search condition 43 using the temporary distance image 41 generated by the first disparity search unit 103A and outputs the search condition 43 to the second disparity search unit 103B. An operation of the condition generation unit 106 will be described later.

The left image 21, the right image 31, and the search condition 43 are input to the second disparity search unit 103B. The second disparity search unit 103B searches for a region of the reference image corresponding to the invalid region of the standard image according to the search condition 43. Although a detailed operation of the second disparity search unit 103B will be described later, the second disparity search unit 103B uses ZSAD or the like similarly to the first disparity search unit 103A. The second disparity search unit 103B generates the distance image 44 by the operation and outputs the distance image 44 to the vehicle control device 4. The second disparity search unit 103B may recalculate a disparity value of a pixel block whose disparity has been calculated by the first disparity search unit 103A, or may receive the temporary distance image 41 from the first disparity search unit 103A and use the calculation result.

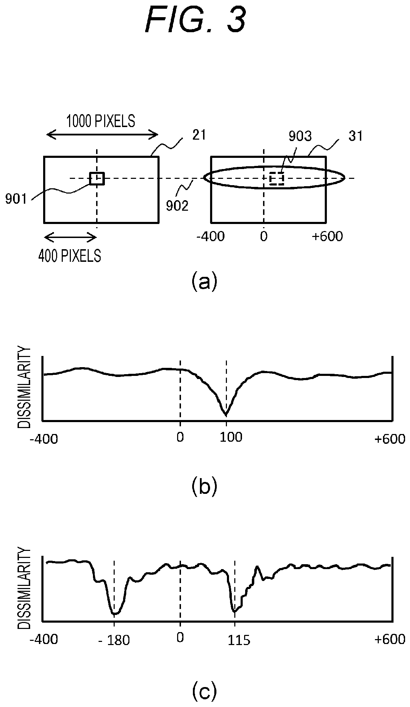

FIG. 3 is a conceptual view illustrating a disparity determination performed by the first disparity search unit 103A. FIG. 3(a) illustrates the left image 21 and the right image 31. In this example, a region of a reference image corresponding to a region 901 of the left image 21, which is a standard image, that is, a region of the right image 31 is searched for. Since the left camera 2 and the right camera 3 are installed side by side in the horizontal direction in the present embodiment, the epipolar line is a broken line indicated by reference sign 902 extending in the horizontal direction. In a case where each width of the left image 21 and the right image 31 in the lateral direction in the drawing is 1000 pixels and the center of the region 901 is located at the 400-th pixel from the left end, numerical values of -400 to +600 are assigned to the right image 31, which is the reference image, as illustrated in the drawing. For example, when it is determined that a region 903 having the 500-th pixel from the left of the reference image as the center corresponds to the region 901 of the standard image, a disparity is calculated as "100".

FIG. 3(b) is a view illustrating an example of a dissimilarity with the region 901 for each position on the broken line 902 of the reference image. In the example illustrated in FIG. 3(b), there is a peak having the minimum dissimilarity and there is no other peak having a close value, and thus, the disparity of the region 901 is calculated as "100". FIG. 3(c) is a view illustrating another example of the dissimilarity with the region 901 for each position on the broken line 902 of the reference image. In the example illustrated in FIG. 3(b), there are two peaks having the minimum dissimilarity and values thereof are substantially the same, it is difficult to determine whether the disparity of the region 901 is "-180" or "+115". In such a case, the first disparity search unit 103A sets the region 901 as an invalid region, and sets "0" at a position corresponding to the region 901 of the temporary distance image 41.

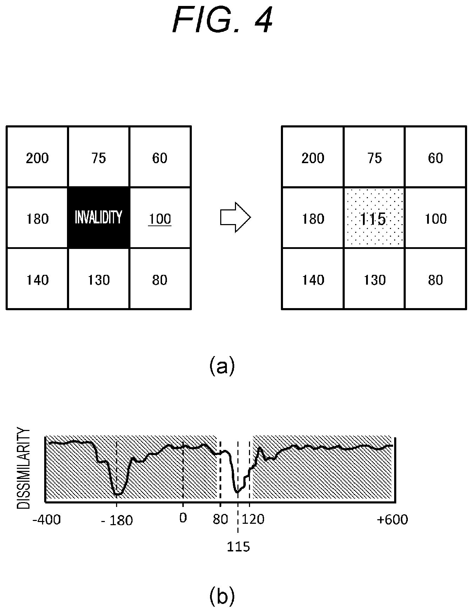

FIG. 4 is a conceptual view for describing operations of the condition generation unit 106 and the second disparity search unit 103B. When receiving the information 42 indicating an invalid region from the disparity invalidity determination unit 105, the condition generation unit 106 refers to the temporary distance image 41 to determine a disparity candidate value of the invalid region. The disparity candidate value is determined based on one or more disparity values set in the periphery of the invalid region in the temporary distance image 41. The periphery of the invalid region may be a region adjacent to the invalid region, or may be a region which is not adjacent to the invalid region in the periphery of the invalid region. In the present embodiment, a specific operation will be described hereinafter assuming that a disparity value of a region adjacent to the right side of the invalid region is adopted as a candidate standard value. In addition, a range of plus or minus 20 pixels from the standard value is set as candidates in the present embodiment.

For example, in a case where the disparity value of the region adjacent to the right of the invalid region is "100" as illustrated on the left side of FIG. 4(a), the condition generation unit 106 sets disparity candidate values to "80 to 120" by adding plus and minus 20 to "100". That is, the search condition 43 in this case is information indicating that the "disparity value candidates of the region 901 are 80 to 120". Note that, in practice, information of an X coordinate and a Y coordinate in the standard image of the region 901, for example, is stored such that the region 901 can be identified.

The second disparity search unit 103B that has received the search condition 43 searches for the disparity of the region 901 of the standard image within the range of the disparity 80 to 120. For example, there are two peaks in the example illustrated in FIG. 3(c) since the entire region is set as a target, but the disparity can be identified as "115" by performing a search only in the range of the disparity 80 to 120 as illustrated in FIG. 4(b). Therefore, the disparity of the invalid region can be identified as illustrated on the right side of FIG. 4(a).

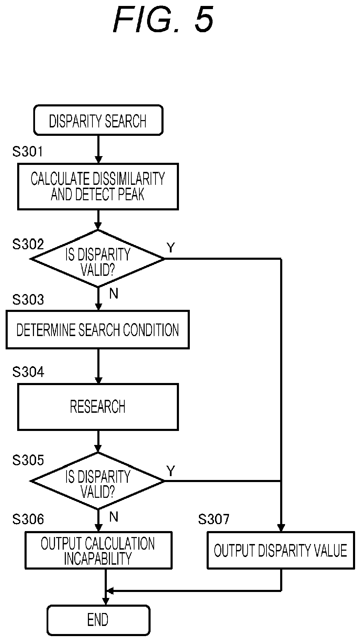

FIG. 5 is a flowchart illustrating an operation of the operation device 1 according to the present embodiment. Meanwhile, FIG. 5 describes only processing of one pixel block in order to simplify the notation and the description. In practice, the operation device 1 sequentially changes processing target pixel blocks in a standard image and executes the processing illustrated in FIG. 5 for the entire region of the standard image.

First, in step S301, the first disparity search unit 103A calculates a dissimilarity of each of blocks of a reference image arranged side by side in the horizontal direction in the processing target pixel block, and detects a peak indicating the minimum value thereof. In subsequent S302, the first disparity search unit 103A determines whether the obtained peak is a valid value that needs to be adopted as a disparity. For example, the first disparity search unit 103A determines a peak value as invalid when a plurality of peaks are obtained and there is a peak indicating a value close to the minimum value in addition to a peak indicating the minimum value of the dissimilarity. When a peak value is determined as valid, the first disparity search unit 103A sets a disparity value corresponding to the peak value in the temporary distance image 41 and the distance image 44 and outputs the disparity value (S307), and ends the processing illustrated in FIG. 5.

When the first disparity search unit 103A determines the peak value as invalid in step S302 (S302: NO), a special value indicating that the disparity is not calculable, for example, "0" is set and output for the processing target pixel block in the temporary distance image 41. Therefore, the processing target pixel block is detected by the disparity invalidity determination unit 105, and information for identifying the processing target pixel block is described in the information 42 indicating an invalid region and output to the condition generation unit 106. In subsequent step S303, the condition generation unit 106 reads a disparity of the invalid region in the temporary distance image 41, that is, a pixel block adjacent to the processing target pixel block, and adds a predetermined width, for example, plus or minus 20 pixels to a value of the disparity to determine the search condition 43 as a disparity candidate, that is, a search range.

Since the condition generation unit 106 outputs the search condition 43 to the second disparity search unit 103B, the second disparity search unit 103B performs a search again according to the search condition 43 in step S304. Specifically, the second disparity search unit 103B calculates a dissimilarity in the range set in the search condition 43 similarly to step S301 to detect a peak. In subsequent S305, the second disparity search unit 103B determines whether the obtained peak is a valid value that needs to be adopted as a disparity similarly to step S302.

When an affirmative determination is made in S305, the second disparity search unit 103B sets a disparity value corresponding to the peak value in the processing target pixel block of the distance image 44 and outputs the disparity value, and ends the processing illustrated in FIG. 5. When a negative determination is made in step S305, the second disparity search unit 103B sets a special value indicating that the disparity is not calculable, for example, "0", in the processing target pixel block of the distance image 44 and outputs the special value, and ends the processing illustrated in FIG. 5.

According to the above-described first embodiment, the following operational effects can be obtained.
(1) The operation device 1 includes: the first disparity search unit 103A that uses the left image 21, which is a standard image that is an image obtained by capturing with the left camera 2, and the right image 31, which is a reference image that is an image obtained by capturing with the right camera 3, to calculate a disparity in the left image 21 in units of pixel blocks and generate the temporary distance image 41; the disparity invalidity determination unit 105 that identifies an invalid region for which disparity calculation from the temporary distance image 41 has failed; the condition generation unit 106 that generates the search condition 43 including disparity candidates of the invalid region using the temporary distance image 41; and the second disparity search unit 103B that uses the left image 21, the right image 31, and the search condition 43 to calculate the disparity of the invalid region in units of pixel block. Therefore, the disparity can be calculated using a calculation result of a dissimilarity by adding the search condition 43 to a pixel block for which the disparity calculation has failed. That is, the appropriate disparity can be calculated since the calculation result of the dissimilarity of the pixel block itself is used.
(2) The second disparity search unit 103B calculates the disparity of the invalid region in units of pixel blocks from among the disparity candidates with a predetermined range as a search range. Therefore, a peak of the dissimilarity can be correctly evaluated since a search is performed again in the range limited by the search condition 43.
(3) The condition generation unit 106 sets a disparity of a region adjacent to the invalid region as the disparity candidate of the invalid region. Since a distance often changes continuously, the accuracy of the calculated disparity can be improved by using the disparity of the adjacent region having the closest distance from the invalid region as the candidate.
(4) Both the left image 21 and the right image 31 are images obtained by capturing a three-dimensional space spreading in the vertical direction and the horizontal direction. The condition generation unit 106 sets a disparity of a region that is adjacent to the invalid region and exists in the horizontal direction of the invalid region as the disparity candidate of the invalid region. The distance to the ground increases from the bottom to the top in the vertical direction in the captured image even if there is no obstacle, but the distance is substantially constant in the horizontal direction if there is no obstacle. Therefore, the accuracy of the calculated disparity can be improved by using the disparity of the region adjacent in the horizontal direction as the candidate.

### (First Modification)

The vehicle control device 4 is not necessarily installed on the vehicle 9. In this case, any device that uses the temporary distance image 41 may be installed on the vehicle 9. For example, a display device that presents the temporary distance image 41 to an occupant of the vehicle 9 may be installed, or a wireless communication device that transmits the temporary distance image 41 to the outside of the vehicle 9 may be installed.

### (Second Modification)

In the first embodiment, the above-described functional configuration of the operation device 1 is merely an example. Some functional configurations illustrated in FIG. 2 may be integrated, or a configuration illustrated in one functional block diagram in FIG. 2 may be divided into two or more functions. In particular, the first disparity search unit 103A and the second disparity search unit 103B having similar operations may be integrated. Note that the "integration" includes using a hardware arithmetic circuit and software in an overlapping manner.

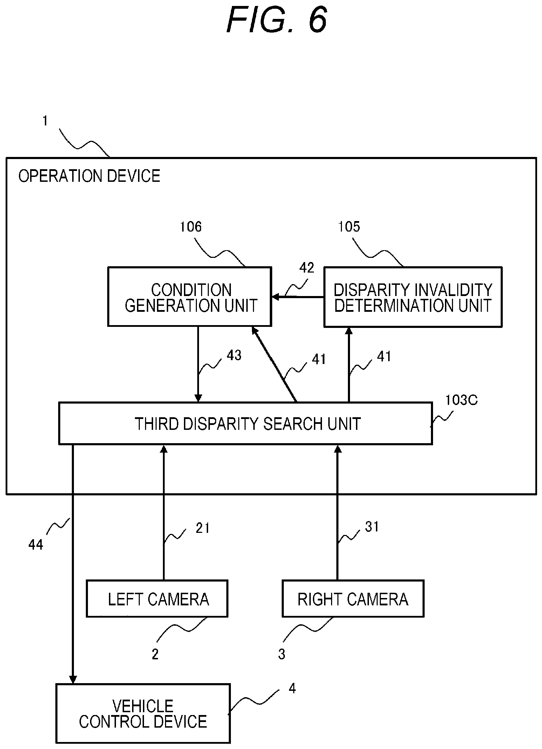

FIG. 6 is a functional configuration diagram of the operation device 1 according to a second modification. In the second modification, the operation device 1 includes a third disparity search unit 103C in which the first disparity search unit 103A and the second disparity search unit 103B are integrated, instead of the first disparity search unit 103A and the second disparity search unit 103B. The third disparity search unit 103C changes an operation depending on whether or not the search condition 43 is input from the condition generation unit 106. The third disparity search unit 103C operates as the first disparity search unit 103A when the search condition 43 is not input from the condition generation unit 106, and operates as the second disparity search unit 103B when the search condition 43 is input from the condition generation unit 106.

### (Third Modification)

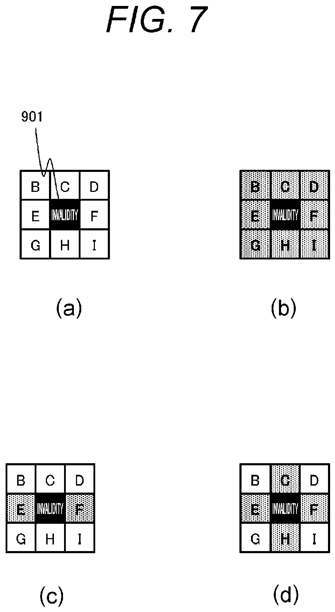

FIG. 7 is a view illustrating a pixel block referred to by the condition generation unit 106 according to a third modification. In the above-described first embodiment, the specific example in which the condition generation unit 106 refers to only one region in the periphery of the invalid region has been described. However, the condition generation unit 106 may refer to a plurality of regions to determine a disparity candidate value as illustrated in FIGS. 7(b) to 7(d).

FIG. 7(a) is a view for describing a name of a pixel block. FIG. 7(a) is a view illustrating a certain invalid region 901 and a pixel block adjacent to the invalid region 901, and names of B to I as one alphabet are assigned to eight pixel blocks adjacent to the invalid region 901. Only the pixel block on the right of the invalid region 901 is referred to in the first embodiment, which corresponds to referring to only the block F in FIG. 7(a).

In the present modification, the condition generation unit 106 may select two or more regions adjacent to the invalid region 901 and use disparity values stored in the selected regions as standard values as illustrated in FIGS. 7(b) to 7(d). As illustrated in FIG. 7(b), the condition generation unit 106 may adopt disparity values of all the regions B to I as standard values. This is advantageous when there is a margin in calculation cost. In addition, as illustrated in FIG. 7(c), the condition generation unit 106 may use disparity values of the region E and the region F arranged in the horizontal direction as standard values. This is a technique using the fact that adjacent regions in the horizontal direction have close disparities, and can be performed at lower calculation cost than a technique illustrated in FIG. 7(b).

Further, the condition generation unit 106 may adopt only the disparity values of the upper, lower, left, and right regions of the invalid region, that is, the regions C, E, F, and H as the standard values as illustrated in FIG. 7(d). A technique illustrated in FIG. 7(d) can be realized at intermediate calculation cost between those of FIG. 7(b) and FIG. 7(c), and an intermediate effect between those of FIG. 7(b) and FIG. 7(c) can be obtained. Next, a specific example of a technique illustrated in FIG. 7(c) will be described.

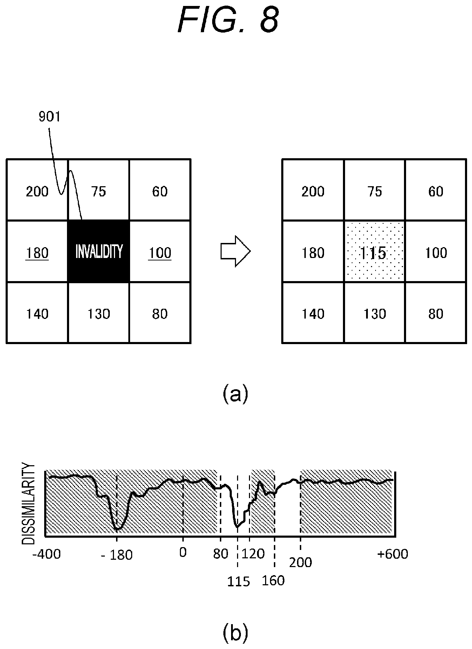

FIG. 8 is a view illustrating a specific example in which the condition generation unit 106 sets a disparity value of a pixel block adjacent to the invalid region 109 in the horizontal direction as a standard value, and corresponds to FIG. 4 in the first embodiment. In a case where a disparity value of a region adjacent to the right of the invalid region is "100" and a disparity value of a region adjacent to the left of the invalid region is "180" as illustrated on the left side in FIG. 8(a), the condition generation unit 106 sets disparity candidate values as "80 to 120" and "160 to 200" by adding plus or minus 20 to each of "100" and "180". That is, the search condition 43 in this case is information indicating that the "disparity value candidates of the region 901 are 80 to 120 and 160 to 200".

The second disparity search unit 103B that has received the search condition 43 searches for the disparity of the region 901 of the standard image within the ranges of the disparities 80 to 120 and the disparities 160 to 200. Note that there is no peak of a local minimum value in the disparity 160 to 200 in the example illustrated in FIG. 8(b), and thus, the output of the second disparity search unit 103B is similar to that of the first embodiment.

### (Fourth Modification)

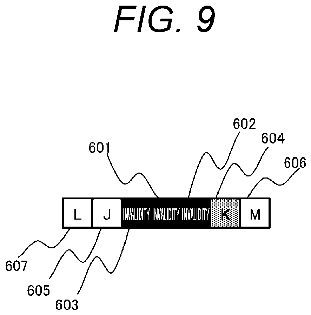

A pixel block referred to by the condition generation unit 106 is not limited to a block adjacent to an invalid region. FIG. 9 is a view illustrating an example in which the condition generation unit 106 refers to a pixel block other than the pixel block adjacent to the invalid region. In the example illustrated in FIG. 9, three pixel blocks existing at the center, that is, pixel blocks 601 to 603, are invalid regions, and a pixel block 605 and a pixel block 607 existing on the left thereof and a pixel block 604 and a pixel block 606 existing on the right thereof are not invalid regions.

In a case where the pixel block 601, which is the invalid region, is a processing target, the condition generation unit 106 refers to a pixel block that is closest to the processing target pixel block and is not an invalid region. Since both the pixel block 602 and the pixel block 603 adjacent to the processing target pixel block 601 are the invalid regions in the example illustrated in FIG. 9, either the pixel block 604 or the pixel block 605 that is second closest to the processing target pixel block is referred to.

### (Fifth Modification)

In the above-described first embodiment, the second disparity search unit 103B performs a search similarly to the first disparity search unit 103A although a region to be searched is narrow. However, the second disparity search unit 103B may simply perform a selection by simplifying a calculation using past calculation progress. In this case, the second disparity search unit 103B acquires the calculation progress from the first disparity search unit 103A.

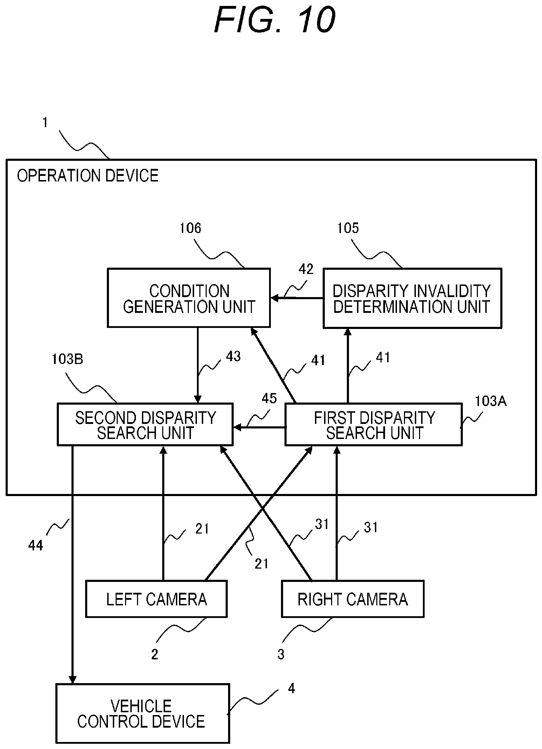

FIG. 10 is a functional configuration diagram of the operation device 1 according to a fifth modification. The functional configuration diagram illustrated in FIG. 10 is different from FIG. 2 in that calculation progress 45 is output from the first disparity search unit 103A to the second disparity search unit 103B. In the present modification, an operation of the first disparity search unit 103A and an operation of the second disparity search unit 103B are different from those of the first embodiment as follows.

That is, the first disparity search unit 103A outputs a plurality of disparity candidates, that is, disparity values whose dissimilarities have the minimum value, for a pixel block whose disparity is not determinable. For example, in the example illustrated in FIG. 3(c), the first disparity search unit 103A outputs information indicating that "the invalid region 901 of the 400-th pixel from the left has disparity candidates of -180 and +115" as the calculation progress 45.

The second disparity search unit 103B determines a disparity using the search condition 43 and the calculation progress 45. Specifically, the second disparity search unit 103B selects the disparity included in the search condition 43 based on the calculation progress 45. For example, in a case where the calculation progress 45 is the above-described information and the search condition 43 is that "disparity value candidates of the region 901 are 80 to 120", the second disparity search unit 103B selects "+115" included in the range of "80 to 120" based on two values of "-180" and "+115" as the disparity of the region 901.

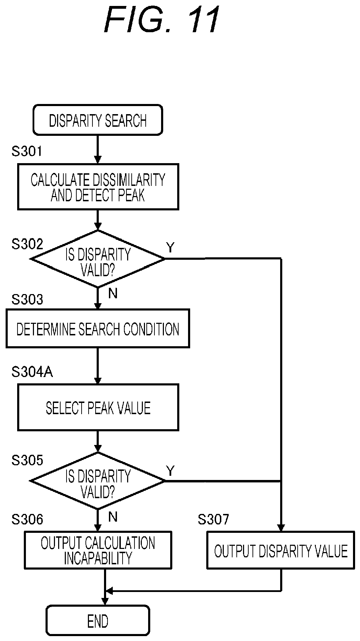

FIG. 11 is a flowchart illustrating an operation of the operation device 1 according to the fifth modification. FIG. 11 corresponds to FIG. 5 according to the first embodiment. A difference from the first embodiment is that step S304A is executed instead of step S304. In step S304A, the second disparity search unit 103B determines a disparity using the search condition 43 and the calculation progress 45 as described above. However, in a case where none of the calculation progress 45 falls within a disparity range included in the search condition 43, the second disparity search unit 103B determines a special value indicating that the disparity is not calculable, for example, "0". Since processing other than step S304A is similar to that of the first embodiment, the description thereof is omitted.

According to the present modification, the following operational effects can be obtained. (5) The first disparity search unit 103A outputs the disparity candidate of the invalid region to the second disparity search unit 103B as calculation progress. The second disparity search unit 103B selects one disparity candidate from the calculation progress 45 using disparity candidates included in the search condition 43, and sets the selected disparity candidate as a disparity of the invalid region. Therefore, the second disparity search unit 103B does not need to calculate a dissimilarity again, and the operation amount of the second disparity search unit 103B can be reduced.

### (Sixth Modification)

In a case where a size of a first pixel block is larger than 1 pixel × 1 pixel, a smaller pixel block is defined as a second pixel block in the fifth modification of the first embodiment. For example, the first pixel block is 4 pixels × 4 pixels, and the second pixel block is 1 pixel × 1 pixel. In this case, the operation device 1 may further calculate a disparity of the second pixel block included in the first pixel block using a disparity of the first pixel block. In the present modification, configurations overlapping with the fifth modification, particularly, an operation in which the second disparity search unit 103B selects a disparity value using the calculation progress 45 will not be described. In the present embodiment, however, the disparity value of the invalid region selected by the second disparity search unit 103B using the calculation progress 45 is also referred to as a "temporary disparity".

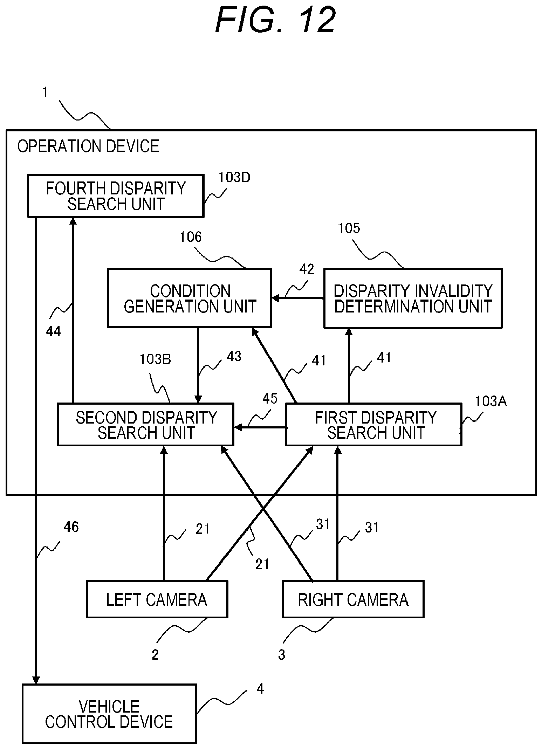

FIG. 12 is a functional configuration diagram of the operation device 1 according to a sixth modification. In the sixth modification, the operation device 1 further includes a fourth disparity search unit 103D. The present embodiment is different from the fifth modification in that the second disparity search unit 103B outputs the distance image 44 to the fourth disparity search unit 103D instead of the vehicle control device 4. The fourth disparity search unit 103D generates a detailed distance image 46 storing distance information in units of second pixel blocks, and outputs the generated detailed distance image 46 to the vehicle control device 4.

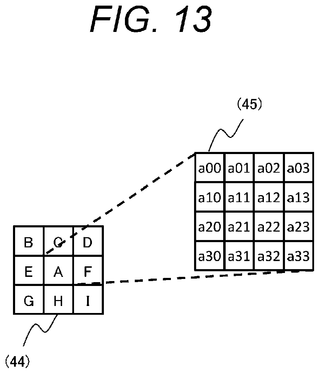

FIG. 13 is a view for describing an operation of the fourth disparity search unit 103D according to the sixth modification. Each of nine blocks A to I illustrated on the left side of FIG. 13 has a size of a first pixel block, for example, 4 pixels × 4 pixels. Each of sixteen blocks a00 to a33 illustrated on the right side of FIG. 13 has a size of the second pixel block, for example, 1 pixel × 1 pixel. As described above, the distance information is stored in units of the first pixel blocks in the distance image 44, and the distance information is stored in units of the second pixel block in the detailed distance image 46. Therefore, it can be said that the left and right of FIG. 13 correspond to the distance image 44 and a part of the detailed distance image 46, respectively. The fourth disparity search unit 103D calculates detailed distance information as illustrated in FIG. 13 for all the pixel blocks constituting the distance image 44.

In the present modification, a relationship between the block A illustrated on the left of FIG. 13 and each of the blocks a00 to a33 illustrated on the right of FIG. 13 is referred to as a higher-level/lower-level relationship. Here, a wider region has a higher level. For example, a higher-level block of the block a00 is the block A, and lower-level blocks of the block A are the blocks a00 to a33.

Details of the block A are illustrated in a00 to a33 on the right side of FIG. 13. For each of a00 to a33, the fourth disparity search unit 103D calculates a dissimilarity similarly to the first disparity search unit 103A, identifies a corresponding region in a reference image, and calculates a disparity. Meanwhile, the fourth disparity search unit 103D searches only a predetermined range based on a disparity of A which is the higher-level block when searching for the region corresponding to a00 to a33 from the reference image. For example, when the disparity of the block A is "+115", only a range of "+95 to +135" is searched as a range of plus or minus 20 pixels. However, when the disparity of the higher-level block is not calculated, the fourth disparity search unit 103D may determine that the disparity of the corresponding lower-level block is not calculable, or may search all points on an epipolar line without identifying a range.

When operations of the second disparity search unit 103B and the fourth disparity search unit 103D are compared, a size of a target block and a source of information for restricting a search range are different. The size of the target block is the unit of the first pixel block in the second disparity search unit 103B and the unit of the second pixel block in the fourth disparity search unit 103D. The source of the information for restricting the search range is the search condition 43 in the second disparity search unit 103B, and the disparity of the corresponding higher-level block in the fourth disparity search unit 103D.

According to the present modification, the following operational effects can be obtained.

(6) A size of a second block is smaller than a size of a first block. The first disparity search unit 103A outputs candidate values, which are the disparity candidates of the invalid region, to the second disparity search unit 103B as the calculation progress 45. The second disparity search unit 103B selects one of the candidate values using the disparity candidates to set the selected candidate value as a temporary disparity, and the fourth disparity search unit 103D calculates a disparity of the second block included in the invalid region using a predetermined range from the temporary disparity as a search range. Therefore, even when the disparity has not been obtained with the size of the first block, the operation device 101 can first calculate a temporary disparity by the second disparity search unit 103B using peripheral disparity information, and calculate the disparity of the second block using the temporary disparity.

Note that the second disparity search unit 103B calculates the temporary disparity using the calculation progress 45 in the present modification, but the second disparity search unit 103B may calculate a dissimilarity of an invalid region again without using the calculation progress 45 as in the first embodiment.

Note that the second disparity search unit 103B and the fourth disparity search unit 103D have been described as different configurations in the present modification, but may be integrated.

### (Seventh Modification)

In the above-described first embodiment, the condition generation unit 106 causes the search condition 43 to include the information indicating the range set for the standard value of the disparity candidate. However, the search condition 43 may include a standard value of a disparity candidate without including range information, and the second disparity search unit 103B may determine a range based on the standard value. For example, the search condition 43 of the first embodiment is the information indicating that "candidates for disparity values of the region 901 are 80 to 120", for example. In the present modification, however, the search condition 43 may be information indicating that "a standard value of a disparity value of the region 901 is 100", and the second disparity search unit 103B may set a range of "80 to 120" by setting plus or minus 20 with "100" as the center.

### (Eighth Modification)

The first disparity search unit 103A and the second disparity search unit 103B may generate and output whether or not a valid disparity has not been calculated independently of the temporary distance image 41 and the distance image 44. In addition, at least one of the temporary distance image 41, the information 42 indicating an invalid region, the search condition 43, and the distance image 44 may be stored in a storage device (not illustrated) existing outside the operation device 1 in a process of calculation.

### -Second Embodiment-

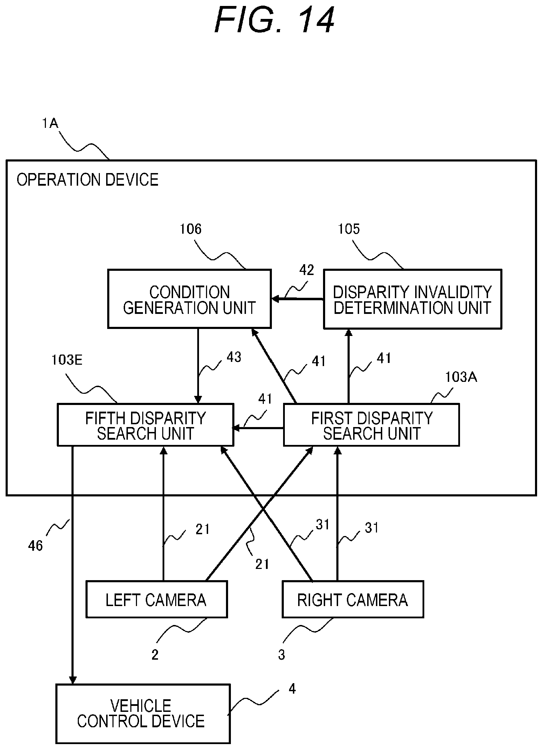

A second embodiment of an operation device according to the present invention will be described with reference to FIGS. 14 to 15. In the following description, a difference will mainly be described by applying the same reference signs to the same constituent elements as those of the first embodiment. A point not specifically described is the same as that of the first embodiment. The present embodiment is different from the sixth modification of the first embodiment mainly in terms of including a fifth disparity search unit that creates the detailed distance image 46 without passing through the distance image 44. In addition, in the present embodiment, a size of a first block is larger than 1 pixel × 1 pixel, and a second block size is defined as a size smaller than the first block size, which is similar to the sixth modification.

Since a hardware configuration of an operation device 1A according to the second embodiment is the same as the hardware configuration of the operation device 1 according to the first embodiment, the description thereof will be omitted.

FIG. 14 is a functional configuration diagram of the operation device 1A according to the second embodiment. A difference from FIG. 2 in the first embodiment is that a fifth disparity search unit 103E is provided instead of the second disparity search unit 103B. A function of the fifth disparity search unit 103E substantially corresponds to a combination of the function of the second disparity search unit 103B and the function of the fourth disparity search unit 103D in the sixth modification. Details of an operation of the fifth disparity search unit 103E will be described later.

In the present embodiment, the first disparity search unit 103A also outputs the calculated temporary distance image 41 to the fifth disparity search unit 103E. The left image 21, the right image 31, the temporary distance image 41, and the search condition 43 are input to the fifth disparity search unit 103E. The fifth disparity search unit 103E outputs the detailed distance image 46 to the vehicle control device 4. Operations of the disparity invalidity determination unit 105 and the condition generation unit 106 are similar to those in the first embodiment.

The fifth disparity search unit 103E calculates, for each first pixel block constituting the temporary distance image 41, distance information with a higher resolution, that is, disparities of a plurality of second pixel blocks. At this time, when a disparity is set in a first pixel block set as a processing target, the fifth disparity search unit 103E determines a range in which a disparity of a second pixel block is searched for based on the disparity value. In addition, when the disparity is not set in the first pixel block set as the processing target, in other words, when the first pixel block as the processing target is an invalid region, the fifth disparity search unit 103E searches a range set in the search condition 43.

### (Operation of Operation Device 1A)

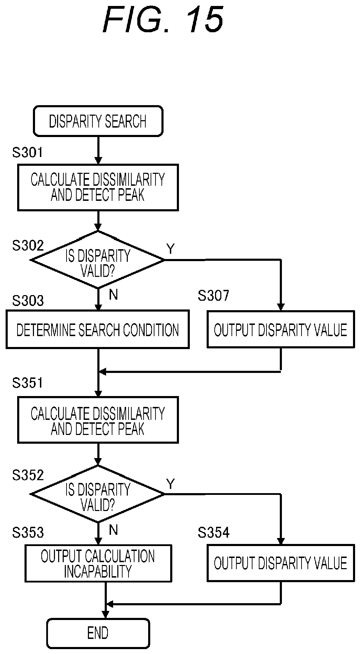

FIG. 15 is a flowchart illustrating an operation of the operation device 1A according to the second embodiment. In the operation of the operation device 1A to be described later, steps S301 to S307 are processes for each first pixel block, and step S351 and the subsequent steps are processes for each second pixel block. Although symbols of repetitive processes are omitted for the brief description in the flowchart to be described later, in practice, the processes of steps S301 to S307 are executed for all the first pixel blocks constituting a standard image, and the processes in step S351 and the subsequent steps are executed for all the second pixel blocks constituting the temporary distance image 41. That is, a "processing target" in steps S301 to S307 is each first pixel block, and a "processing target" in step S351 and the subsequent steps is each second pixel block.

First, in step S301, the first disparity search unit 103A sets a first pixel block included in the standard image as a processing target, calculates a dissimilarity of each of blocks of a reference image arranged side by side in the horizontal direction, and detects a peak indicating a minimum value thereof. In subsequent S302, the first disparity search unit 103A determines whether the obtained peak is a valid value that needs to be adopted as a disparity. When determining that the peak is the valid value, the first disparity search unit 103A sets a disparity value corresponding to the peak value as a value of the processing target pixel block of the temporary distance image 41 and outputs the value (S307), and proceeds to step S351.

When the first disparity search unit 103A determines the peak value as invalid in step S302 (S302: NO), a special value indicating that the disparity is not calculable, for example, "0" is set and output for the processing target pixel block in the temporary distance image 41. Therefore, the processing target pixel block is detected by the disparity invalidity determination unit 105, and information for identifying the processing target pixel block is described in the information 42 indicating an invalid region and output to the condition generation unit 106. In subsequent step S303, the condition generation unit 106 reads a disparity of the invalid region in the temporary distance image 41, that is, a pixel block adjacent to the processing target pixel block. Then, the condition generation unit 106 adds a predetermined width, for example, plus or minus 20 pixels, to the disparity value to determine the search condition 43 as disparity candidates, that is, a search range, outputs the determined search condition 43 to the fifth disparity search unit 103E, and proceeds to step S351.

In step S351, the fifth disparity search unit 103E calculates a dissimilarity with a second pixel block included in the standard image as a processing target. The process in step S351 is similar to that in step S301, except that a disparity candidate value is used. The disparity candidate value used by the fifth disparity search unit 103E will be described. In principle, the disparity candidate value used to calculate the dissimilarity is based on a disparity value set in a higher-level pixel block of a processing target pixel block in the temporary distance image 41. For example, in a case where the disparity of the higher-level pixel block of the processing target pixel block is set to "100" in the temporary distance image 41, "100" is set as a standard value, and a predetermined range with the standard value as the center, for example, "80 to 120" obtained by adding plus or minus 20 pixels is set as the disparity candidate value.

However, in a case where the disparity is not set in the higher-level pixel block of the processing target pixel block in the temporary distance image 41, the fifth disparity search unit 103E sets a value described in the search condition 43 as the disparity candidate value. The case where the disparity is not set in the higher-level pixel block is, for example, a case where a special value indicating that the disparity is not calculable, for example, "0" is set. It is sufficient for the fifth disparity search unit 103E to calculate the dissimilarity only for the disparity candidate value, and thus, the calculation accuracy of the disparity can be improved while reducing the amount of calculation.

In subsequent step S352, the fifth disparity search unit 103E determines whether or not a peak obtained similarly to step S302 is a valid value that needs to be adopted as a disparity. However, a size of the processing target pixel block is different between step S302 and step S352. In addition, the fifth disparity search unit 103E proceeds to step S354 if an affirmative determination is made in step S352, and proceeds to step S353 if a negative determination is made in step S352.

In step S353, the fifth disparity search unit 103E sets a value of a region corresponding to a processing target in the detailed distance image 46 to the special value indicating that the disparity is not calculable, for example, "0", outputs the value, and ends the processing illustrated in FIG. #16#. In step S354, the fifth disparity search unit 103E sets the value of the region corresponding to the processing target in the detailed distance image 46 to the disparity value determined to be valid and outputs the disparity value, and ends the processing illustrated in FIG. #16#.

### (Comparison with Sixth Modification)

A description will be given by comparing the operation of the sixth modification of the first embodiment in which the detailed distance image 46 is output similarly to the second embodiment with the operation of the present embodiment. In the sixth modification, when a disparity of a first pixel block is not calculable, the second disparity search unit 103B calculates the disparity of the first pixel block again using disparities of peripheral pixel blocks, and then, the fourth disparity search unit 103D calculates a disparity of a second pixel block. On the other hand, in the present embodiment, when a disparity of a first pixel block is not calculable, the fifth disparity search unit 103E calculates a disparity of a second pixel block using disparity values of other first pixel blocks adjacent to a higher-level pixel block of the second pixel block as the processing target.

The sixth modification and the second embodiment are common in that the disparity in the processing target pixel block is calculated using the value of the disparity of the pixel block existing in the periphery of the processing target pixel block. In addition, both the techniques are also common in that the accuracy of disparity is enhanced while reducing the amount of calculation.

According to the above-described second embodiment, the following operational effects can be obtained.

(7) A size of a second block is smaller than a size of a first block.

The fifth disparity search unit 103E calculates a disparity in units of second blocks other than the invalid region using, as the search range, a predetermined range from a disparity of the first block including the second block set as a calculation target. Therefore, the operation device 1A can create the detailed distance image 46 for the entire standard image.

### -Third Embodiment-

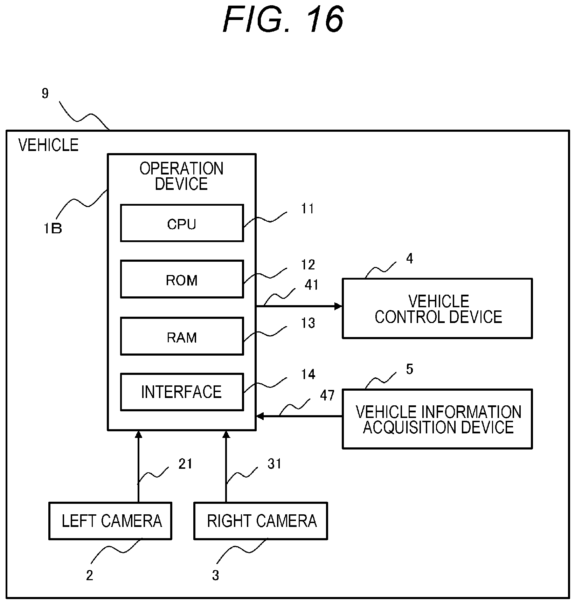

A third embodiment of an operation device according to the present invention will be described with reference to FIGS. 16 to 17. In the following description, a difference will mainly be described by applying the same reference signs to the same constituent elements as those of the first embodiment. A point not specifically described is the same as that of the first embodiment. The present embodiment is different from the first embodiment mainly in terms of considering an inclination of a vehicle.

FIG. 16 is a hardware configuration diagram of a vehicle 9B according to the third embodiment. FIG. EX3 is different from FIG. 1 in the first embodiment in that a vehicle information acquisition device 5 is added. The vehicle information acquisition device 5 acquires vehicle information 47 by a sensor (not illustrated) and outputs the vehicle information 47 to the operation device 1. The vehicle information 47 is information capable of calculating at least an inclination of the vehicle 9B. The vehicle information 47 is, for example, information related to bending of a road surface on which the vehicle 9 is currently traveling, the inclination, a curvature of the curve, and wear of tires. However, the vehicle information 47 may include an output of an inclinometer or a gyro sensor (not illustrated) that measures the inclination of the vehicle 9B.

A functional configuration of the operation device 1 and an operation of each functional configuration are similar to those of the first embodiment except for an operation of the condition generation unit 106. The condition generation unit 106 changes a pixel block to be referred to in accordance with the inclination of the vehicle 9B. The pixel block to be referred to is changed in accordance with an inclination of a vehicle body since a change in depth with respect to a change in position in the horizontal direction is gentler than a ratio of a change in depth with respect to a change in position in the vertical direction.

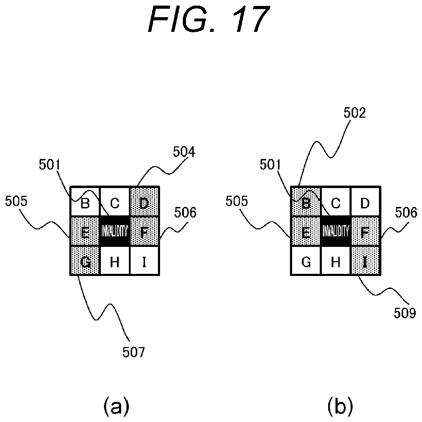

FIG. 17 is a view illustrating the pixel block referred to by the condition generation unit 106B in the present embodiment.

FIG. 17(a) is a view illustrating an example in which pixel blocks to be referred to are selected in a left-right asymmetric manner in a case where the vehicle 9B is inclined with respect to a road surface due to bending of the road surface, an inclination, a curve, wear of tires, or the like. FIG. 17(a) corresponds to a case where the vehicle 9B is inclined clockwise in the traveling direction, that is, a case where an image captured by the left camera 2 or the right camera 3 is rotated counterclockwise. In this case, disparity values of blocks 505 and 506 as well as blocks 504 and 507 adjacent in the horizontal direction on an image of a block 501 are used in order to re-search a disparity for the block 501 for which a disparity has been determined to be invalid.

FIG. 17(b) is a view illustrating an example of a case where the vehicle 9B is inclined to the opposite side of that in FIG. 17(a). In this case, a rotation direction is reversed, and thus, a pixel block to be referred is also reversed, that is, blocks 502 and 509 are selected in addition to the blocks 505 and 506.

According to the above-described third embodiment, the following operational effects can be obtained.

(8) An operation device 1C, the left camera 2, and the right camera 3 are installed on the vehicle 9B. The condition generation unit 106 identifies the horizontal direction based on the vehicle information 47. Therefore, even when the vehicle 9B is inclined due to wear of tires, an inclination of a road, or the like, disparity values of pixel blocks adjacent in the horizontal direction, which are less different than those in the vertical direction, can be used as candidate standard values in search for the disparity of the invalid region.

In each of the above-described embodiments and modifications, the program is stored in the ROM (not illustrated), but the program may be stored in a non-volatile memory (not illustrated) of the operation device 1. In addition, the operation device 1 may include input/output interfaces (not illustrated), and the programs may be read from another device through a medium available by the input/output interface and the operation device 1 if necessary. Here, the medium indicates, for example, a storage medium attachable to and detachable from the input/output interface or a communication medium, that is, a wired, wireless, or optical network, or a carrier wave or a digital signal propagating through the network. In addition, some or all of the functions realized by the programs may be realized by a hardware circuit or an FPGA.

The above-described embodiments and modifications may be combined with each other. In particular, it is preferable to combine the second embodiment and the first to fourth modifications. Although various embodiments and modifications have been described above, the present invention is not limited to these contents. Other aspects that can be considered within the scope of the technical ideas of the present invention are also included in the scope of the present invention.

The disclosed content of the following priority application is given as the citation. Japanese Patent Application No. 2019-34231 (filed on February 27, 2019)

### Reference Signs List

1 operation device
2 left camera
3 right camera
4 vehicle control device
9, 9B vehicle
11 CPU
21 left image
31 right image
41 temporary distance image
42 information
44 distance image
45 calculation progress
46 detailed distance image
47 vehicle information
103A first disparity search unit
103B second disparity search unit
103C third disparity search unit
103D fourth disparity search unit
103E fifth disparity search unit
105 disparity invalidity determination unit
106, 106B condition generation unit
106B condition generation unit

## Claims

1. An operation device (1), comprising:
a first disparity search unit (103A) that uses a standard image that is an image obtained by capturing with a first camera (2) and a reference image that is an image obtained by capturing with a second camera (3) to calculate a disparity in the standard image in a unit of a first block and generate a temporary distance image (41);
a disparity invalidity determination unit (105) that identifies an invalid region for which disparity calculation from the temporary distance image (41) has failed;
a condition generation unit (106, 106B) that generates a search condition (43) including disparity candidates of the invalid region using the temporary distance image (41); and **characterized in that** it comprises
a second disparity search unit (103B) that uses the standard image, the reference image, and the search condition (43) to calculate a disparity of the invalid region in a unit of a second block having a size smaller than a size of the first block, and
the first disparity search unit (103A) outputs candidate values, which are the disparity candidates of the invalid region, to the second disparity search unit (103B), and
the second disparity search unit (103B) selects one of the candidate values using the disparity candidates to set the selected candidate value as a temporary disparity, and calculates the disparity of the second block included in the invalid region using a predetermined range from the temporary disparity as a search range.

2. The operation device (1) according to claim 1, wherein
the second disparity search unit (103B) calculates a disparity in the unit of the second block other than the invalid region using, as the search range, a predetermined range from a disparity of the first block including the second block set as a calculation target.

3. The operation device (1) according to claim 1, wherein
the condition generation unit (106, 106B) sets a disparity of a region adjacent to the invalid region as the disparity candidate of the invalid region.

4. The operation device (1) according to claim 1, wherein
both the standard image and the reference image are images obtained by capturing a three-dimensional space spreading in a vertical direction and a horizontal direction, and
the condition generation unit (106, 106B) sets a disparity of a region, which is adjacent to the invalid region and exists in the horizontal direction of the invalid region, as the disparity candidate of the invalid region.

5. The operation device (1) according to claim 4, wherein
the operation device (1), the first camera (2), and the second camera (3) are installed on a vehicle (9, 9B), and
the condition generation unit (106, 106B) identifies a horizontal direction based on vehicle information (47) of the vehicle (9, 9B).

6. A disparity calculation method executed by an operation device (1), which receives inputs of a standard image that is an image obtained by capturing with a first camera (2) and a reference image that is an image obtained by capturing with a second camera (3),
the disparity calculation method comprising:
by the operation device (1),
using the standard image and the reference image to calculate a disparity in the standard image in a unit of a first block and generate a temporary distance image (41);
identifying an invalid region for which disparity calculation from the temporary distance image (41) has failed; generating a search condition (43) including disparity candidates of the invalid region using the temporary distance image (41); and **characterized in that** the method comprises
using the standard image, the reference image, and the search condition (43) to calculate a disparity of the invalid region in a unit of a second block having a size smaller than a size of the first block, and
the first disparity search unit (103A) outputs candidate values, which are the disparity candidates of the invalid region, to the second disparity search unit (103B), and
the second disparity search unit (103B) selects one of the candidate values using the disparity candidates to set the selected candidate value as a temporary disparity, and calculates the disparity of the second block included in the invalid region using a predetermined range from the temporary disparity as a search range.

## Patentansprüche

1. Betriebsvorrichtung (1), die Folgendes umfasst:
eine erste Disparitätssucheinheit (103A), die ein Normbild, das ein Bild ist, das durch Aufnehmen mit einer ersten Kamera (2) erhalten wird, und ein Bezugsbild, das ein Bild ist, das durch Aufnehmen mit einer zweiten Kamera (3) erhalten wird, verwendet, um eine Disparität im Normbild in einer Einheit eines ersten Blocks zu berechnen und ein vorläufiges Entfernungsbild (41) zu erzeugen;
eine Disparitätsungültigkeitsbestimmungseinheit (105), die einen ungültigen Bereich identifiziert, für den die Disparitätsberechnung aus dem vorläufigen Entfernungsbild (41) fehlgeschlagen ist; und
eine Bedingungserzeugungseinheit (106, 106B), die eine Suchbedingung (43), die Disparitätskandidaten des ungültigen Bereichs enthält, unter Verwendung des vorläufigen Entfernungsbilds (41) erzeugt; **gekennzeichnet durch**
eine zweite Disparitätssucheinheit (103B), die das Normbild, das Bezugsbild und die Suchbedingung (43) verwendet, um eine Disparität des ungültigen Bereichs in einer Einheit eines zweiten Blocks, der eine Größe besitzt, die kleiner als eine Größe des ersten Blocks ist, zu berechnen, wobei
die erste Disparitätssucheinheit (103A) Kandidatenwerte, die die Disparitätskandidaten des ungültigen Bereichs sind, zur zweiten Disparitätssucheinheit (103B) ausgibt und
die zweite Disparitätssucheinheit (103B) einen der Kandidatenwerte unter Verwendung der Disparitätskandidaten wählt, um den gewählten Kandidatenwert als eine vorläufige Disparität zu setzen, und die Disparität des zweiten Blocks, der im ungültigen Bereich enthalten ist, unter Verwendung eines vorgegebenen Bereichs aus der vorläufigen Disparität als einen Suchbereich berechnet.

2. Betriebsvorrichtung (1) nach Anspruch 1, wobei
die zweite Disparitätssucheinheit (103B) eine Disparität in der Einheit des zweiten Blocks mit Ausnahme des ungültigen Bereichs unter Verwendung als den Suchbereich eines vorgegebenen Bereichs aus einer Disparität des ersten Blocks, der den zweiten Block enthält, die als ein Berechnungsziel gesetzt ist, berechnet.

3. Betriebsvorrichtung (1) nach Anspruch 1, wobei
die Bedingungserzeugungseinheit (106, 106B) eine Disparität eines Bereichs, der zum ungültigen Bereich benachbart ist, als den Disparitätskandidaten des ungültigen Bereichs setzt.

4. Betriebsvorrichtung (1) nach Anspruch 1, wobei
sowohl das Normbild als auch das Bezugsbild Bilder sind, die durch Aufnehmen eines dreidimensionalen Raums erhalten werden, der sich in einer vertikalen Richtung und in einer horizontalen Richtung ausbreitet, und
die Bedingungserzeugungseinheit (106, 106B) eine Disparität eines Bereichs, der zum ungültigen Bereich benachbart ist und in der horizontalen Richtung des ungültigen Bereichs vorhanden ist, als den Disparitätskandidaten des ungültigen Bereichs setzt.

5. Betriebsvorrichtung (1) nach Anspruch 4 wobei
die Betriebsvorrichtung (1), die erste Kamera (2) und die zweite Kamera (3) an einem Fahrzeug (9, 9B) installiert sind und
die Bedingungserzeugungseinheit (106, 106B) eine horizontale Richtung auf der Grundlage von Fahrzeuginformationen (47) des Fahrzeugs (9, 9B) identifiziert.

6. Disparitätsberechnungsverfahren, das durch eine Betriebsvorrichtung (1) ausgeführt wird und Eingaben eines Normbilds, das ein Bild ist, das durch Aufnehmen mit einer ersten Kamera (2) erhalten wird, und eines Bezugsbilds, das ein Bild ist, das durch Aufnehmen mit einer zweiten Kamera (3) erhalten wird, empfängt, wobei
das Disparitätsberechnungsverfahren Folgendes umfasst:
durch die Betriebsvorrichtung (1)
Verwenden des Normbilds und des Bezugsbilds, um eine Disparität im Normbild in einer Einheit eines ersten Blocks zu berechnen und ein vorläufiges Entfernungsbild (41) zu erzeugen;
Identifizieren eines ungültigen Bereichs, für den die Disparitätsberechnung aus dem vorläufigen Entfernungsbild (41) fehlgeschlagen ist; und
Erzeugen einer Suchbedingung (43), die Disparitätskandidaten des ungültigen Bereichs enthält, unter Verwendung des vorläufigen Entfernungsbilds (41); wobei
das Verfahren **gekennzeichnet ist durch**
Verwenden des Normbilds, des Bezugsbilds und der Suchbedingung (43), um eine Disparität des ungültigen Bereichs in einer Einheit eines zweiten Blocks, der eine Größe besitzt, die kleiner als eine Größe des ersten Blocks ist, zu berechnen, wobei
die erste Disparitätssucheinheit (103A) Kandidatenwerte, die die Disparitätskandidaten des ungültigen Bereichs sind, zur zweiten Disparitätssucheinheit (103B) ausgibt und
die zweite Disparitätssucheinheit (103B) einen der Kandidatenwerte unter Verwendung der Disparitätskandidaten wählt, um den gewählten Kandidatenwert als eine vorläufige Disparität zu setzen, und die Disparität des zweiten Blocks, der im ungültigen Bereich enthalten ist, unter Verwendung eines vorgegebenen Bereichs aus der vorläufigen Disparität als einen Suchbereich berechnet.

## Revendications

1. Dispositif de fonctionnement (1), comprenant :
une première unité de recherche de disparité (103A) qui utilise une image standard qui est une image obtenue par capture avec une première caméra (2) et une image de référence qui est une image obtenue par capture avec une seconde caméra (3) pour calculer une disparité dans l'image standard dans une unité d'un premier bloc et pour générer une image de distance temporaire (41) ;
une unité de détermination d'invalidité de disparité (105) qui identifie une région invalide pour laquelle un calcul de disparité à partir de l'image de distance temporaire (41) a échoué ;
une unité de génération de condition (106, 106B) qui génère une condition de recherche (43) incluant des disparités candidates de la région invalide en utilisant l'image de distance temporaire (41) ; et
**caractérisé en ce qu'**il comprend
une seconde unité de recherche de disparité (103B) qui utilise l'image standard, l'image de référence et la condition de recherche (43) pour calculer une disparité de la région invalide dans une unité d'un second bloc ayant une taille plus petite qu'une taille du premier bloc, et
la première unité de recherche de disparité (103A) sort des valeurs candidates, qui sont des disparités candidates de la région invalide, vers la seconde unité de recherche de disparité (103B), et
la seconde unité de recherche de disparité (103B) sélectionne l'une des valeurs candidates en utilisant les disparités candidates pour fixer la valeur candidate sélectionnée à titre de disparité temporaire, et calcule la disparité du second bloc incluse dans la région invalide en utilisant une plage prédéterminée à partir de la disparité temporaire à titre de plage de recherche.

2. Dispositif de fonctionnement (1) selon la revendication 1, dans lequel la seconde unité de recherche de disparité (103B) calcule une disparité dans l'unité du second bloc autre que la région invalide en utilisant, à titre de plage de recherche, une plage prédéterminée à partir d'une disparité du premier bloc incluant le second bloc fixée comme cible de calcul.

3. Dispositif de fonctionnement (1) selon la revendication 1, dans lequel l'unité de génération de condition (106, 106B) fixe une disparité d'une région adjacente à la région invalide à titre de disparité candidate de la région invalide.

4. Dispositif de fonctionnement (1) selon la revendication 1, dans lequel
à la fois l'image standard et l'image de référence sont des images obtenues par capture d'un espace tridimensionnel se propageant dans une direction verticale et dans une direction horizontale, et
l'unité de génération de condition (106, 106B) fixe une disparité d'une région, qui est adjacente à la région invalide et qui existe dans la direction horizontale de la région invalide, à titre de disparité candidate de la région invalide.

5. Dispositif de fonctionnement (1) selon la revendication 4, dans lequel
le dispositif de fonctionnement (1), la première caméra (2) et la seconde caméra (3) sont installés sur un véhicule (9, 9B), et
l'unité de génération de condition (106, 106B) identifie une direction horizontale sur la base d'informations de véhicule (47) du véhicule (9, 9B).

6. Procédé de calcul de disparité exécuté par le dispositif de fonctionnement (1), qui reçoit des entrées d'une image standard qui est une image obtenue par capture avec une première caméra (2) et d'une image de référence qui est une image obtenue par capture avec une seconde caméra (3),
le procédé de calcul de disparité comprenant les étapes consistant à :
via le dispositif de fonctionnement (1),
utiliser l'image standard et l'image de référence pour calculer une disparité dans l'image standard dans une unité d'un premier bloc et pour générer une image de distance temporaire (41) ;
identifier une région invalide pour laquelle un calcul de disparité à partir de l'image de distance temporaire (41) a échoué ;
générer une condition de recherche (43) incluant des disparités candidates de la région invalide en utilisant l'image de distance temporaire (41) ; et
**caractérisé en ce que** le procédé comprend l'étape consistant à utiliser l'image standard, l'image de référence et la condition de recherche (43) pour calculer une disparité de la région invalide dans une unité d'un second bloc ayant une taille plus petite que la taille du premier bloc, et
la première unité de recherche de disparité (103A) sort des valeurs candidates, qui sont des disparités candidates de la région invalide, vers la seconde unité de recherche de disparité (103B), et
la seconde unité de recherche de disparité (103B) sélectionne l'une des valeurs candidates en utilisant les disparités candidates pour fixer la valeur candidate sélectionnée à titre de disparité temporaire, et calcule la disparité du second bloc incluse dans la région invalide en utilisant une plage prédéterminée à partir de la disparité temporaire à titre de plage de recherche.
